Europäisches Patentamt

European Patent Office

Office européen des brevets

(11) Veröffentlichungsnummer: **0 162 199**
**A1**

# (12) EUROPÄISCHE PATENTANMELDUNG

(21) Anmeldenummer: 85102011.5

(22) Anmeldetag: 23.02.85

(51) Int. Cl.⁴: **B 01 D 53/34**

(30) Priorität: 27.02.84 DE 3406989
07.12.84 DE 3444664
07.12.84 DE 3444665

(43) Veröffentlichungstag der Anmeldung:
27.11.85 Patentblatt 85/48

(84) Benannte Vertragsstaaten:
AT BE CH FR GB IT LI NL SE

(71) Anmelder: Aliermann, Martin, Dipl.-Ing.
Rothensteiner Strasse 10
D-2733 Tarmstedt(DE)

(71) Anmelder: Lübbers, Hermann
Bremer Landstrasse 31
D-2733 Tarmstedt(DE)

(72) Erfinder: Aliermann, Martin, Dipl.-Ing.
Rothensteiner Strasse 10
D-2733 Tarmstedt(DE)

(72) Erfinder: Lübbers, Hermann
Bremer Landstrasse 31
D-2733 Tarmstedt(DE)

(74) Vertreter: Bruse, Willy Hans Heinrich
Edisonstrasse 14
D-2800 Bremen 33(DE)

(54) **Verfahren und Vorrichtung zur Entschwefelung heisser, schadstoffhaltiger Abgase.**

(57) Beschrieben werden ein Verfahren und eine Vorrichtung zur Entschwefelung heißer, schadstoffhaltiger Abgase mit Wämerückgewinnung, wobei die aus einem kombinierten Wärmetauscher besteht, der in der Gasleitung (1) angeordnet ist, vertikal abwärts ohne Umlenkung durchströmte Gaskanäle (3), im ersten Abschnitt eine Wasserkühlung (4) und im letzten Abschnitt eine Luftkühlung (5) aufweist, so daß die Rauchgase unter den Taupunkt abgekühlt werden und das Kondensat mit den Schadstoffen ausgetragen werden. Die Gasleitung (1) ist in einem im Anschluß an den Wärmetauscheraustritt (8) vertikal geführten Teil mit einem Anschlußstutzen (12) für erwärmte Luft (Gas) und vor dem Wärmetauscher (2) mit Düsen (20) zur Zerstäubung von Wasser ausgestattet. Die Luftkühlung (5) des Wärmetauschers (2) kann unabhängig vom Abgasstrom in der Gasleitung (1) regelbar sein.

./...

0162199

## Verfahren und Vorrichtung zur Entschwefelung heißer, schadstoffhaltiger Abgase

Die Erfindung betrifft ein Verfahren zur Entschwefelung heißer, schadstoffhaltiger Abgase mit Wärmerückgewinnung, bei dem die Gase zunächst im vertikalen Abwärtsstrom durch eine Wasserkühlung und anschließend durch Luftkühlung geführt und dabei unter den Taupunkt abgekühlt werden. Die Erfindung betrifft außerdem eine Vorrichtung zur Ausübung dieses Verfahrens.

Die Rückgewinnung der Wärme aus Abgasen, insbesondere der Wärme aus Abgasen von Feuerungsanlagen, ist allgemein und insbesondere z.B. aus den DE-OS 31 06 716 sowie 31 49 183 bekannt. Hiernach werden die Rauchgase aus der Feuerung durch mehrstufige Wärmetauscher geführt, die den Rauchgasen Wärme entziehen und diese Wärme entweder wieder in den Kreislauf der Feuerungsanlage einspeisen oder einer Fremdnutzung zuführen. Die Kühlung der Rauchgase erfolgt jedoch in Bereichen oberhalb des Taupunktes der Rauchgase, so daß einerseits Kondensatbildungen vermieden und andererseits der Abzug der Rauchgase über Kamine herkömmlicher Bauart ermöglicht wird. Nachteilig ist aber, daß die aus dem Kamin austretenden Abgase mit allen mitgeführten Schadstoffen auch nicht mehr ausreichend in die Atmosphäre aufsteigen und sich dort verteilen können.

Demgegenüber ist es jedoch bereits aus der FR-PS 14 00 745 bekannt, in einer Vorrichtung zur Wärmerückgewinnung aus Abgasen der Feuerung einer Heizungsanlage eine Unterkühlung bis unter den Taupunkt vorzunehmen, um dadurch einen hohen Anteil an Wärmerückgewinnung und somit eine Verbesserung der Wirtschaftlichkeit zu erreichen. Zwangsläufig erfolgt bei diesem Verfahren eine Kondensatbildung, so daß mit dem Kondensat auch Schadstoffe ausfallen. Die bekannte Lösung hat jedoch den erheblichen Nachteil, daß alle Teile der Rauchgasleitung, die mit dem Gasstrom nach dessen Unterkühlung unter den Taupunkt in Berührung kommen, aus gegen aggressives Kondensat resistentem Werkstoff, z.B. Keramik, Edelstahl, oder dgl., bestehen müssen. Dieser Stand der Technik scheidet daher prinzipiell aus, wenn die Ableitung der Rauchgase über einen herkömmlichen oder bereits vorhandenen Schornstein erfolgen soll, und erfordert außerdem einen erheblichen Anteil an Fremdenergie für die Ableitung der unter den Taupunkt abgekühlten Abgase. Die in dieser Druckschrift behandelte Ausbildung ist außerdem mit technischen Mängeln in Bezug auf die Gasführung behaftet, weil ständig Kondensat in den noch ungesättigten Gasstrom zurückfällt. Ebenso wie bei den zuvor genannten Anordnungen ist der erforderliche technische Aufwand zur Erreichung der beabsichtigten Wirkung sehr umfangreich. Aus diesen bekannten Anordnungen sind Anleitungen für die Gestaltung einer vor allem für die Verwendung in Verbindung mit Hausfeuerungen geeigneten Anlage nicht zu gewinnen.

Baulich einfachere Wärmerückgewinnungsvorrichtungen für Abgaswärme sind zwar aus der DE-OS 29 12 986 bekannt, jedoch ist damit eine Entschwefelung der Abgase nicht zu erreichen und auch nicht beabsichtigt.

Es ist Aufgabe der Erfindung, ein wirkungsvolles Verfahren zur Entschwefelung von Abgasen, insbesondere von Rauchgasen aus Feuerungen, vor allem Feuerungen kleinerer Heizungsanlagen, zu schaffen, das die Verwendung herkömmlicher Schornsteine und vor allem auch den nachträglichen Einbau einer dazu geeigneten Vorrichtung in bestehende Heizungsanlagen bei entsprechend kleinem Raumbedarf ermöglicht.

Zur Lösung dieser Aufgabe ist erfindungsgemäß ein Verfahren vorgesehen, bei dem der Gasstrom im gesamten Kühlungsbereich ohne Umlenkung vertikal abwärts gerichtet ist und nach der Kühlung bei aufwärts gerichteter Strömung durch Warmluftbeimischung wieder erwärmt wird.

Die Anwendung dieses Verfahrens ermöglicht die Entschwefelung der Abgase, insbesondere der Rauchgase einer Feuerung mit gezielter Wärmerückgewinnung in Anlagen, die an herkömmliche Schornsteine oder Kamine angeschlossen sind, so daß auch die nachträgliche Anwendung des Verfahrens in bestehenden Anlagen nicht auf Schwierigkeiten trifft. Zu den überragenden Vorteilen gehört es, daß bei diesem Verfahren gesättigte Abgase und Kondensat stets in der gleichen Richtung senkrecht nach unten strömen, so daß Kondensat nur in den gesättigten Bereich des Abgasstromes eintritt. Damit wird ein Dichtwachsen des die Kühlung der Abgase bewirkenden Wärmetauschers verhindert und dieser vielmehr mit fortlaufender Selbstreinigung betrieben.

Bei einer vorteilhaften Verfahrensanwendung ist vorgesehen, daß das Kühlmittel die Wasserkühlung und die Luftkühlung von unten nach oben durchströmen. Dies hat zur Folge, daß die Temperatur des Kühlmittels in Gegenrichtung zum Temperaturabfall des Gasstromes bei der Abkühlung ansteigt.

Die Vorrichtung zur Anwendung des erfindungsgemäßen Verfahrens soll mit möglichst geringem baulichen Aufwand in Kompaktbauweise die Aufgabenstellung erfüllen. Erfindungsgemäß wird dies durch einen Wärmetauscher erreicht, der in einem oberen Abschnitt eine Wasserkühlung, in einem unteren Abschnitt eine Luftkühlung und über beide Abschnitte durchlaufénde, vertikal angeordnete, gerade Gaskanäle aufweist. Diese Gaskanäle sind zweckmäßig in großer Zahl mit geringem Durchmesser ausgelegt, so daß eine große Kanalwandfläche vom Gasstrom berührt wird, um den Wärmetausch zu begünstigen. Dadurch werden kleine Abmessungen des Wärmetauschers ermöglicht. Kompakt und im Sinne der Aufgabe günstig wirksam wird die Vorrichtung, wenn die die Gaskanäle umschließende Wasserkühlung und die die Gaskanäle gleichfalls umschließende Luftkühlung übereinander angeordnet und durch eine Wärmedämmung voneinander getrennt sind sowie beide je einen unteren Einlauf sowie einen oberen Auslauf aufweisen. Bei einer bevorzugten Ausführung sind oberhalb der Wasserkühlung ein Eintrittssammler und unterhalb der Luftkühlung ein Austrittssammler für die Abgase in den gerade von oben nach unten durchlaufenden Gaskanälen vorgesehen. Eine solche Ausbildung ist kostengünstig herzustellen und erlaubt in einem Strang durchlaufende Gaskanäle, die von oben nach unten durchströmt werden, wobei die Eintrittstemperatur im überhitzten Bereich und die Austrittstemperatur am unteren Ende im übersättigten Bereich liegt, so daß ausfallendes Kondensat mit dem Gasstrom nach unten in einen Bereich geringerer Temperatur fällt und nicht rückverdampft. Schließlich ermöglicht dies eine baulich einfache Kondensatableitung. Dazu ist vorgesehen, daß ein Sammler für Kondensat mit einer Austragsvorrichtung für Kondensat an den Austrittssammler angeschlossen ist. Die Wiedererwärmung des Abgases erfolgt dagegen in einer Aufwärtsströmung, z.B. durch die warme Abluft aus dem Luftkühler des Wärmetauschers, wozu der Auslauf des Luftkühlers über einen Stutzen an ein vorteilhaft ebenfalls senkrecht angeordnetes Teilstück der Gasleitung hinter dem Wärmetauscher angeschlossen wird, so daß das Abgas mit einer für die Einleitung in einen herkömmlichen Schornstein aus Mauerwerk oder dgl. ausreichenden Temperatur abgeführt werden kann.

Eine Besonderheit der Erfindung stellt die Anordnung von Düsen zur Zerstäubung von Wasser in der Gasleitung vor dem Wärmetauscher dar.

Durch diese Düsen kann die Temperatur der Abgase bereits vor dem Wärmetauscher in dem für dessen einwandfreien Betrieb erforderlichen Umfang herabgesetzt werden. Gleichzeitig erfolgt dabei eine Vorreinigung von Feststoffen im Abgasstrom, so daß eine besondere Eignung für Feuerungen mit hohen Abgastemperaturen und größeren Feststoffmengen im Abgasstrom, wie Ruß, Asche, usw., gegeben ist. Feststoffe im Abgas fallen unabhängig vom Taupunkt durch die Anreicherung mit Wasser, welches aus den Düsen zerstäubt wird, aus, so daß in solchen Fällen unterhalb des vertikalen Teils der Gasleitung mit den Düsen für die Verstäubung von Wasser ein Sammelraum und eine Austragsschleuse für Kondensat angeordnet werden.

Bei einer weiteren besonderen Ausführungsform sind in der Gasleitung hinter dem Wärmetauscher Düsen zur Zerstäubung einer Neutralisationslösung für schwefelhaltige Rauchgase angeordnet. Geeignet ist eine schwach sodahaltige Wasserlösung ( etwa 5 % ) zur Neutralisation der Restgehalte an Schwefel und anderen Schadstoffen in den Rauchgasen.

In Anpassung an den Verlauf der Gaskanäle in dem Wärmetauscher sieht die Erfindung vor, daß die Düsen in einem vertikal durchströmten Teil der Gasleitung angeordnet und mit ihren Düsenöffnungen gegen den Gasstrom gerichtet sind, um dadurch zu verhindern, daß Ablagerungen entstehen, die die Selbstreinigung beeinträchtigen. Zur Erhöhung der Wirksamkeit der Düsen ist vorgesehen, daß diese abwärts gegen den Aufwärtsstrom der Abgase gerichtet sind. Schließlich verhindert eine Ausbildung, bei der der vertikale Teil der Gasleitung mit den Düsen tiefer angeordnet ist als der Eintritt des Wärmetauschers, daß die mit der Düsenanordnung ausgesonderten Feststoffe und Kondensat in den Wärmetauscher gelangen können. Düsen nach diesem Vorschlag lassen sich in beliebiger Zahl anordnen und leicht an die vorgegebenen Betriebsverhältnisse anpassen. Ein besonderer Vorteil ist die leichte Regelbarkeit der zu zerstäubenden Wassermenge, so daß mit geringem Aufwand eine Anpassung an sich ändernde Abgastemperaturen möglich ist, insbesondere durch sich selbsttätig regelnde Regelkreise aus Meßgliedern und Steuergliedern.

0162199

Schließlich besteht ein besonderer Gestaltungsgedanke der Erfindung darin, daß die Gasleitung in einem im Anschluß an den Wärmetauscheraustritt vertikal geführten Teilstück und einen Anschlußstutzen für erwärmte Luft (Gas) aufweist und daß die Luftkühlung des Wärmetauschers der Vorrichtung unabhängig vom Abgasstrom in der Gasleitung regelbar ist.

Ein wesentlicher Vorteil dieser Ausbildung ist die Möglichkeit der Warmluftnutzung aus dem Teil des Wärmetauschers mit der Luftkühlung, z.B. zur Raumheizung, und ein anderer wesentlicher Vorteil ist die Möglichkeit der Regelung der Abgastemperatur vor dem Eintritt in den Kamin völlig unabhängig von der Regelung der Betriebsverhältnisse in dem Wärmetauscher. Zwangsläufig ergibt sich aber auch der Vorteil einer besseren Regelung der Betriebsverhältnisse in dem mit Luftkühlung ausgestatteten Teil des Wärmetauschers. Über getrennte Ventilatoren oder dgl. kann einerseits der Luftstrom in der Luftkühlung des Wärmetauschers und andererseits die Beimengung erwärmter Luft zu den Abgasen vor deren Eintritt in den Kamin gesteuert werden.

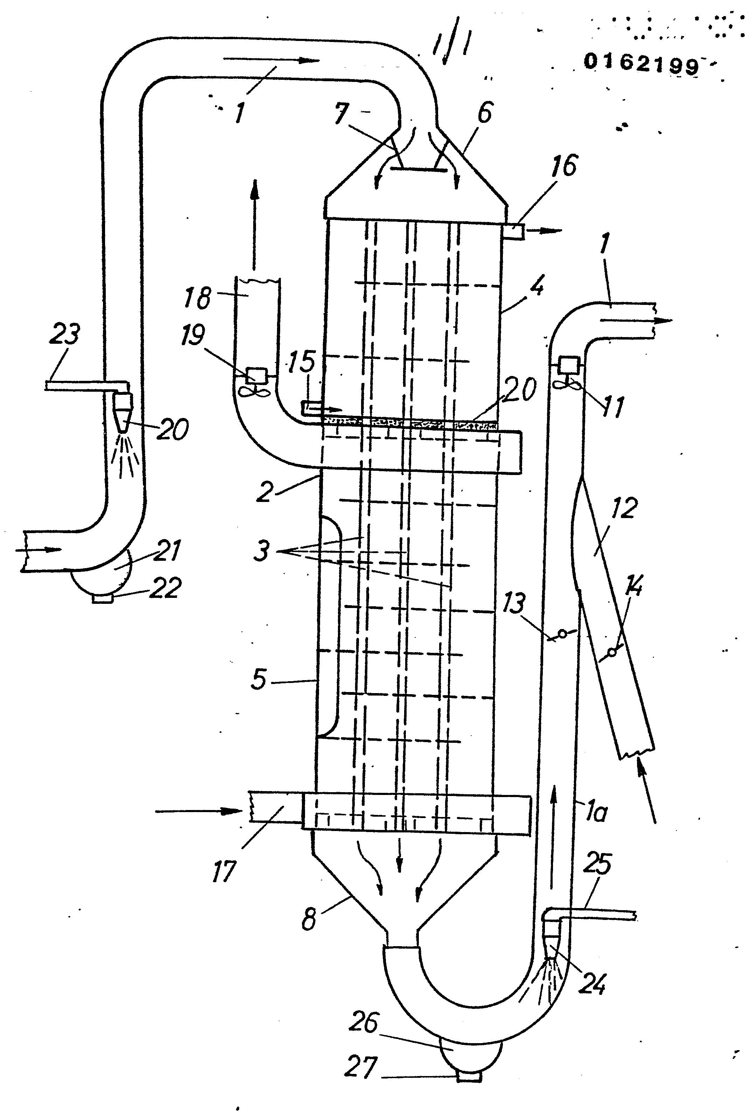

Zur näheren Erläuterung der Erfindung ist auf der Zeichnung ein Ausführungsbeispiel dargestellt, welches schematisch den Aufbau der Vorrichtung zeigt.

Die Abgase aus einer Industrieanlage, insbesondere auch aus der Feuerung einer Heizungsanlage werden mittels der Gasleitung 1 aus der nicht dargestellten Feuerung in einen ebenfalls nicht dargestellten Kamin geführt. In dieser Gasleitung 1 ist der Wärmetauscher 2 angeordnet, welcher in gegliederter Anordnung vertikale Gaskanäle 3 aufweist. Im oberen Abschnitt 4 sind diese Gaskanäle 3 durch eine Wasserkühlung und im unteren Abschnitt 5 durch eine Luftkühlung geführt. Sowohl die Wasserkühlung im Abschnitt 4 als auch die Luftkühlung im Abschnitt 5 sind in einem gemeinsamen Gehäuse untergebracht und durch eine Wärmedämmung 28 gegeneinander isoliert. Die Gaskanäle 3 werden abwärts durchströmt, so daß die Gasleitung 1 an einen oberen Eintrittssammler 6 mit Verteilereinbauten 7 angeschlossen ist und sich im Anschluß an einen unteren Austrittssammler 8 fortsetzt. Unterhalb dieses Austrittssammlers 8 ist ein Sammelraum 9 für das Kondensat mit einer Austragsschleuse 10 vorgesehen. Im Anschluß an diese Kondensatableitung ist die Abgasleitung 1 in einem Teilbereich 1a möglichst vertikal nach oben geführt, um in diesem Teilbereich entstehende Kondensatbildungen ebenfalls in den Sammelraum 9 abzuleiten. Ein Ventilator 11 sorgt für ausreichende Gasgeschwindigkeit vor dem Eintritt in den Kamin, wobei eine Wiedererwärmung der Abgase durch Zufuhr von Warmluft oder dgl. über den Stutzen 12 vorgenommen werden kann. Regelbare Drosselklappen 13 und 14 sind für die Regelung des Abgasstromes bzw. der Wärmezufuhr bestimmt.

Das die Wasserkühlung in dem oberen Abschnitt 4 durchströmende Wasser wird über den unteren Zulauf 15 zugeführt und tritt über den oberen Auslauf 16 wieder aus. Dieses Kühlwasser kann gleichzeitig zur Vorwärmung des Speisewassers einer Heizungsanlage Verwendung finden. Das Ausführungsbeispiel zeigt weiter eine Luftkühlung für den unteren Abschnitt 5 mit einem unteren Eintritt 17 und einem oberen Austritt 18 sowie einem Ventilator 19 für die Aufrechterhaltung einer ausreichenden Strömungsgeschwindigkeit in der Luftkühlung. Zur Erzielung einer möglichst gleichmäßigen Durchströmung der Passagen der Luftkühlung sind sowohl der Eintrittssammler im Anschluß an die Leitung 17 als auch der Austrittssammler vor der Leitung 18 als exzentrische Ringkammern mit unterschiedlichem Querschnitt gestaltet, wie es an sich bekannt ist.

Eine oder mehrere Düsen 20 für die Zerstäubung von Wasser oder dgl. sind in einem vertikalen Teil 1b der Gasleitung vor dem Wärmetauscher 2 angeordnet und mit ihren Öffnungen gegen den vorteilhaft aufwärts verlaufenden Gasstrom gerichtet. Unterhalb dieses vertikalen Teils 1b der Gasleitung 1 ist ebenfalls ein Sammelraum 21 mit einer Austragsschleuse 22 für Kondensat angeordnet. Für die Regelung der Menge des zu zerstäubenden Wassers ist in den Düsen 20 oder in deren Zuleitung 23 ein entsprechendes Regelorgan vorgesehen. Die Zerstäubung von Wasser in diesem Teil 1b der Gasleitung 1 bewirkt ein Niederschlagen von Feststoffen im Abgasstrom und eine Kühlung des Abgases auf einen vorgegebenen Wert, wobei die Feststoffe und eventuelles Kondensat in dem Sammelraum 21 aufgefangen und über die Austragsschleuse 22 abgenommen werden. Die Düsen 24 für die Zerstäubung einer Neutralisationslöson für den Restgehalt an Schwefel und anderen Schadstoffen in den Rauchgasen (Abgasen) hinter dem Wärmetauscher sind im unteren Teil des aufsteigenden Rauchgasrohres 1a angeordnet und werden über die Leitung 25 gespeist. Gegebenenfalls kann über diese Düsen 24 auch eine andere Neutralisationslösung oder einfach nur Wasser versprüht werden.

0162199

Verfahren und Vorrichtung zur Entschwefelung
heißer, schadstoffhaltiger Abgase

Patentansprüche:

1. Verfahren zur Entschwefelung heißer, schadstoffhaltiger Abgase mit Wärmerückgewinnung, bei dem die
Abgase zunächst im vertikalen Abwärtsstrom durch eine
Wasserkühlung und anschließend durch eine Luftkühlung
geführt und dabei unter den Taupunkt abgekühlt werden,
dadurch gekennzeichnet, daß der Gasstrom im gesamten
Kühlungsbereich ohne Umlenkung vertikal abwärts gerichtet ist und nach der Kühlung bei aufwärts gerichteter
Strömung durch Warmluftbeimischung wiedererwärmt wird.

2. Verfahren nach Anspruch 1, dadurch gekennzeichnet,
daß das Kühlmittel die Wasserkühlung (4) und die Luftkühlung (5) von unten nach oben durchströmen.

3. Vorrichtung zur Ausübung des Verfahrens nach den Ansprüchen 1 und 2, dadurch gekennzeichnet, daß sie aus einem Wärmetauscher besteht, der in einem oberen Abschnitt eine Wasserkühlung, in einem unteren Abschnitt eine Luftkühlung und über beide Abschnitte durchlaufende, vertikal angeordnete, gerade Gaskanäle (3) aufweist.

4. Vorrichtung nach Anspruch 3, dadurch gekennzeichnet, daß die die Gaskanäle (3) umschließende Wasserkühlung (4) und die die Gaskanäle (3) gleichfalls umschließende Luftkühlung (5) übereinander angeordnet und durch eine Wärmedämmung (28) voneinander getrennt sind, sowie beide je einen unteren Einlauf (15,17) sowie einen oberen Auslauf (16,18) aufweisen.

5. Vorrichtung nach den Ansprüchen 3 und 4, dadurch gekennzeichnet, daß in der Gasleitung (1) vor dem Wärmetauscher (2) Düsen (20) zur Zerstäubung von Wasser vorgesehen sind.

6. Vorrichtung nach den Ansprüchen 3 bis 5, dadurch gekennzeichnet, daß in der Gasleitung (1a) hinter dem Wärmetauscher Düsen (24) zur Zerstäubung einer Neutralisationslösung für schwefelhaltige Rauchgase angeordnet sind.

7. Vorrichtung nach den Ansprüchen 3 bis 6, dadurch gekennzeichnet, daß die Düsen (20,24) in einem vertikal durchströmten Teil (1a, 1b) der Gasleitung (1) angeordnet und mit ihren Düsenöffnungen gegen den Gasstrom gerichtet sind.

8. Vorrichtung nach den Ansprüchen 3 bis 7, dadurch gekennzeichnet, daß die Gasleitung (1) in einem im Anschluß an den Wärmetauscheraustritt vertikal geführten

- 3 -                                    0162199

Teilstück (1a) einen Anschlußstutzen (12) für erwärmte Luft (Gas) aufweist und daß die Luftkühlung des Wärmetauschers der Vorrichtung unabhängig vom Abgasstrom in der Gasleitung (1) regelbar ist.

9. Vorrichtung nach den Ansprüchen 3 bis 8, dadurch gekennzeichnet, daß für die Luftumwälzung im Luftkühler (5) des Wärmetauschers ein vom Abgasstrom unabhängig wirksamer Ventilator (19) vorgesehen ist.

10. Vorrichtung nach den Ansprüchen 3 bis 9, dadurch gekennzeichnet, daß der Einlauf (12) und der Auslauf (26) der Luftkühlung ( 5) mit exzentrischen Ringkammern (11,10) verbunden sind, deren größte Exzentrizität dem Einlauf bzw. Auslauf diametral gegenüberliegt.

0162199

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | SOVIET INVENTIONS ILLUSTRATED DERWENT PUBLICATIONS LTD., Woche K28,Zusammenfassung Nr. 709680, Q73, 24. August 1983; & SU-A-954 721 (HEAT ENG. RES. INST.) 05-09-1982 | 1-3,6 | B 01 D 53/34 |
| A | US-A-4 149 453 (R.D. REED) * Zusammenfassung; Figur 1. * | 8 | |
| A | FR-A-2 383 396 (GEA LUFTKÜHLERGESELLSCHAFT) * Ganzes Dokument * | | |

---

|  |
|---|
| RECHERCHIERTE SACHGEBIETE (Int. Cl.4) |
| B 01 D 53/00 <br> F 23 J 15/00 |

Der vorliegende Recherchenbericht wurde für alle Patentansprüche erstellt.

| Recherchenort <br> BERLIN | Abschlußdatum der Recherche <br> 23-07-1985 | Prüfer <br> BERTRAM H E H |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
------
& : Mitglied der gleichen Patentfamilie, überein- stimmendes Dokument

EPA Form 1503 03 82